# EUROPEAN PATENT APPLICATION

(11) **EP 0 750 317 A1**
(43) Date of publication of application: **27.12.1996**
(21) Application number: 96201382.7
(22) Date of filing: 23.05.1996
(51) Int. Cl.: G21C 3/32

(54) **Fuel assembly for a boiling water reactor with assymmetrical gaps**

(30) Priority: 14.06.1995 SE 9502149
(71) Applicant: ABB ATOM AB, S-721 63 Västeras (SE)
(72) Inventor: Nylund, Olov, 720 17 Västeras (SE)
(74) Representative: Dahlstrand, Björn

(57) **Abstract**

A reactor core for a boiling water reactor is comprised of a plurality of elongated, mutually parallel fuel assemblies (1), each one comprising a plurality of parallel, vertical fuel rods (7a, 7b). Each fuel assembly is surrounded by a first (9a) and a second pair (9b) of gaps arranged perpendicular to each other, which during reactor operation contain water, said first pair of gaps being made with a relatively large gap width and intended to accommodate two blades (10) of a control rod (11) made with a cruciform cross section, whereas said second pair of gaps is made with a relatively smaller gap width. Each one of the fuel assemblies may be divided into four equally large assembly parts (6a-6d) with the aid of two longitudinal sections orthogonal to each other, a first assembly part (6d) having two sides adjoining said second pair of gaps. The fuel assemblies comprise fuel rods (7b) which have a relatively smaller diameter and fuel rods (7a) which have a relatively larger diameter, whereby at least one-third of the fuel rods in the first assembly part and at most one-fifth of the fuel rods in the other assembly parts have a relatively smaller diameter.

## Description

### TECHNICAL FIELD

The present invention relates to a fuel assembly for use in the reactor core of a boiling water reactor with an asymmetrical core lattice. The reactor core is built up of a plurality of elongated, mutually parallel fuel assemblies with a substantially square cross section, each one comprising a plurality of parallel, vertical fuel rods. Each fuel assembly is surrounded by a first and a second pair of gaps which are arranged perpendicularly to each other and which during reactor operation contain water. The first pair of gaps is made with a relatively large gap width and is intended to accommodate two blades of a control rod made with a cruciform cross section, whereas the second pair of gaps is designed with a relatively smaller gap width. The fuel assemblies may be divided into four equal assembly parts with the aid of two longitudinal sections which are orthogonal to each other, a first assembly part having two sides adjoining the above-mentioned second pair of gaps.

### BACKGROUND ART

A core in a nuclear reactor comprises a plurality of vertically arranged fuel assemblies. These are arranged in a lattice with each fuel assembly included in two rows of fuel assemblies perpendicular to each other. This leads to the creation of a grid pattern of vertical gaps between the fuel assemblies. During operation, the gaps are traversed by water which serves as coolant and as neutron moderator. The reactor core also comprises a plurality of control rods which, by being moved in and out of the core, control the reactivity, and hence the output power, thereof. The control rods are arranged in parallel with the fuel assemblies and have a cruciform cross section with four blades extending perpendicular to each other from a central part. The fuel assemblies are arranged in groups of four forming a so-called supercell. In each supercell, a control rod is arranged so that it can be inserted with each one of its four blades into the two perpendicular gaps which are formed between the fuel assemblies in the supercell, hereinafter referred to as the control rod gaps.

Certain boiling water reactors have an asymmetrical core lattice where the control rod gaps are wider than the other gaps surrounding the supercell, so-called narrow gaps. This means that each fuel assembly is surrounded by a pair of control rod gaps with a relatively large gap width and a pair of narrow gaps with a relatively smaller gap width.

A fuel assembly comprises a plurality of vertical fuel rods containing a stack of circular-cylindrical pellets of a nuclear fuel arranged in a cladding tube. The fuel rods are surrounded by a fuel channel which is normally designed with a square cross section. The fuel rods are placed in a substantially regular lattice. By a fuel rod position is meant a position in the lattice. In the fuel assembly, water flows upwards whereby part of the water is transformed into steam. Water which has a high temperature and contains steam is not as good a moderator as pure water of a lower temperature. A considerable part of the moderation therefore occurs in the gaps between the fuel assemblies where the water normally never reaches the boiling temperature. This is particularly true at the upper part of the core where the percentage of steam is high in the fuel assemblies. One problem in an asymmetrical core lattice is the uneven moderation which is the result of the fact that the moderation in that part of the fuel assembly which adjoins the two narrow gaps is much inferior to the moderation in that part which adjoins the control rod gaps.

To attain a more uniform moderation of the fuel in asymmetrical core lattices, several known solutions are available which are based on the fact that one or a plurality of vertical water tubes are arranged in that part of the fuel assembly which adjoins the two narrow gaps. Swedish patent specification No. 3 808 098 shows a solution where four fuel rods in that part of the fuel assembly which adjoins the two narrow gaps have been replaced by one water tube. A disadvantage with this and other known solutions is that they provide a considerable reduction of the total fuel volume in the fuel assembly, which results in deteriorated fuel economy. Another disadvantage is that when the number of fuel rods decreases, the load (power/unit of length) for the remaining fuel rods increases, which means that the temperature of the fuel becomes higher and the risk of damage to the fuel becomes greater. Unsymmetrically placed water tubes or water channels in various forms also entail an unwanted mechanical complication, especially when they are also utilized for absorbing forces, for example transverse forces or lifting forces.

### THE OBJECT AND ADVANTAGES OF THE INVENTION

The object of the invention is to provide a fuel assembly to be used in a reactor core with an asymmetrical core lattice where the fuel assemblies are given a uniform moderation in the horizontal direction without the load on the fuel rods increasing.

What characterizes a fuel assembly according to the invention will become clear from the appended claims.

The object is achieved by giving a plurality of fuel rods in fuel rod positions in a region near the narrow gaps a diameter which is relatively smaller than the diameter of the other fuel rods. In this way, a greater water/uranium ratio is obtained in this region, which gives improved moderation in the region. A further improvement of the moderation is obtained because the free flow area for water and steam becomes larger when the fuel rods become narrower, which results in the pressure drop in the region near the narrow gaps becoming lower. A lower pressure drop in a region means that water flows there from regions with a higher pressure drop. The result is that the moderation increases in the region near the narrow gaps and at the same time decreases somewhat in the rest of the fuel assembly, that is, the fuel assembly is given a uniform moderation in the horizontal direction. Since the number of fuel rods is maintained, the load per fuel rod becomes unchanged.

Calculations have shown that an additional positive effect is obtained in a reactor core according to the invention in the form of improved thermohydraulic stability.

### BRIEF DESCRIPTION OF THE DRAWINGS

Figure 1 shows a horizontal section of part of a reactor core according to a first embodiment of the invention.

Figures 2 - 4 show other embodiments of the invention.

### DESCRIPTION OF THE PREFERRED EMBODIMENTS

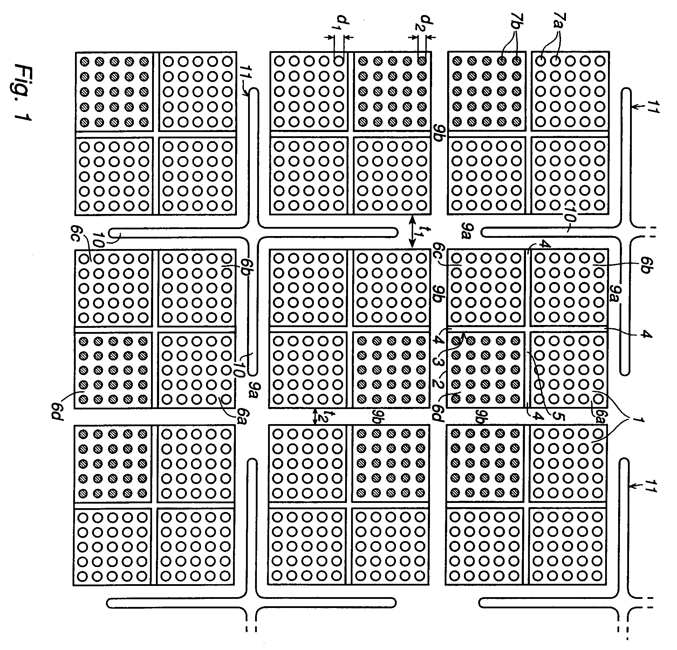

Figure 1 shows a cross section through nine fuel assemblies, which are included in a reactor core in a boiling water reactor, the other fuel assemblies of which (not shown) are designed and arranged in the same way. The fuel assemblies 1 have a substantially square cross section and are arranged vertically in the core. The total number of fuel assemblies in a whole cross section amounts to several hundred. Between the fuel assemblies there are vertical water-filled gaps 9a, 9b. There are two types of gaps, those where the control rods are inserted, so-called control rod gaps 9a which are designed with a relatively large gap width t₁, and so-called narrow gaps 9b which are designed with a smaller gap width t₂. Each fuel assembly 1 has two sides with a common corner which are surrounded by control rod gaps 9a and two opposite sides with a common corner which are surrounded by narrow gaps 9b. The reactor core also comprises a number of control rods 11 placed parallel to the fuel assemblies in the vertically extending gaps. The control rods 11 are designed with a cruciform cross section with four blades which are perpendicular to each other and extend from a central part and which are adapted to be inserted with each one of their four blades 10 into the control rod gaps.

The fuel assembly is enclosed in a fuel channel 2 which is provided with a hollow support member 3 made with a cruciform cross section. The support member has four hollow wings 4 which form a central channel 5 where moderator water circulates. The fuel channel with the support member is divided into four vertical channel-formed parts 6a - 6d, so-called sub-assemblies, with an at least substantially square cross section. Each sub-assembly 6a - 6d contains a number of fuel rods 7a and 7b with a circular cross section. The fuel rods are arranged in a lattice where each fuel rod is included in two rows perpendicular to each other. The rows are kept in their positions by means of spacers (not shown) placed between top tie plates and bottom tie plates (also not shown) on the fuel assembly. The spaces between the fuel rods within each sub-assembly are traversed by water, as is the cruciform channel 5 formed by the support member. The support member is provided with a number of axially distributed openings (not shown) allowing water and steam to flow between the sub-assemblies.

A fuel assembly comprises fuel rods of two different diameters, namely, coarse fuel rods 7a which have a relatively larger outside diameter designated d₁, and narrow fuel rods 7b which have a relatively smaller outside diameter designated d₂. As a suitable dimensioning the following dimensions may be mentioned:
t₁ = 10.0 mm
t₂ = 19.5 mm
d₁ = 9.6 mm
d₂ = 9.0 mm

In the sub-assembly 6d, which is surrounded on both sides by narrow gaps, all the fuel rods are narrow 7b. In the other sub-assemblies 6a - 6c, all the fuel rods are coarse 7. All the fuel assemblies in the core are arranged in the same way. In this way, a greater water/uranium ratio is obtained in the sub-assembly 6d than if all the fuel rods had been coarse. The narrower fuel rods also provide a lower hydraulic resistance, which means that the pressure drop in the sub-assembly 6d is lower than in the other sub-assemblies. This leads to water flowing over to the sub-assembly 6d from the other sub-assemblies. This results in the proportion of water increasing in the sub-assembly 6d while at the same time it decreases in the other sub-assemblies, thus obtaining an equalization of the moderation.

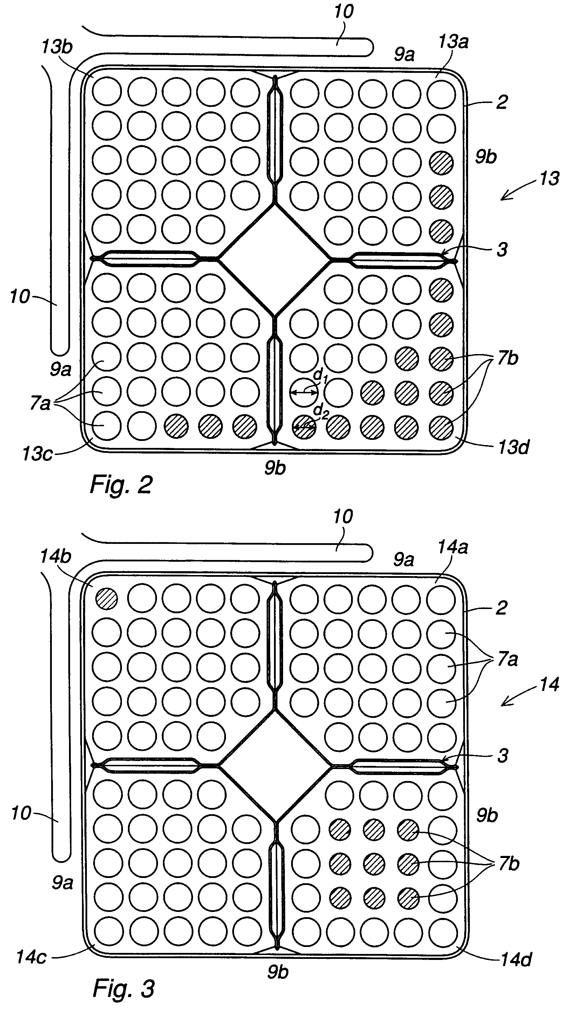

Figure 2 shows another way of placing the narrow fuel rods 7b in a fuel assembly 13 according to the invention. The majority of the narrow fuel rods are arranged in fuel rod positions close to the narrow gaps 9b. In sub-assembly 13d, which on both sides is surrounded by narrow gaps, 12 out of the 24 fuel rod positions are occupied by narrow fuel rods 7b. In sub-assemblies 13a and 13c, which on one side adjoin a narrow gap, three out of the 24 fuel rod positions are occupied by narrow fuel rods. In sub-assembly 13b, which on both sides is surrounded by control rod gaps 9a, all the fuel rods are coarse 7a.

Figure 3 shows an embodiment of a fuel assembly 14 where all the narrow fuel rods 7b are arranged centrally in the sub-assembly 14d. In sub-assemblies 14a and 14c, all the fuel rods are coarse 7a. In the sub-assembly 14b one of the fuel rods is narrow 7b. The narrow fuel rod is arranged in that corner which is surrounded by the control rod gaps 9a. In this embodiment a narrow fuel rod is arranged in the corner nearest the control rod gaps to reduce the load on the fuel rod. There may be several reasons for arranging narrow fuel rods in other positions than those suggested by the invention; for example, the corners may be rounded to such an extent that there is no room for a wide rod.

To obtain a uniform moderation in the fuel assembly, the number of narrow fuel rods in the sub-assemblies 6a, 6b, 6c, 12a, 12b, 12c, 13a, 13b, 13c, 14a, 14b, 14c, which adjoin at least some of the control rod gaps, should not exceed one-fifth of the total number of fuel rods in the sub-assembly, and the number of narrow fuel rods in that assembly part 6d, 12d, 13d, 14d, which is surrounded on both sides by narrow gaps, should exceed one-third of the total number of fuel rods in the sub-assembly.

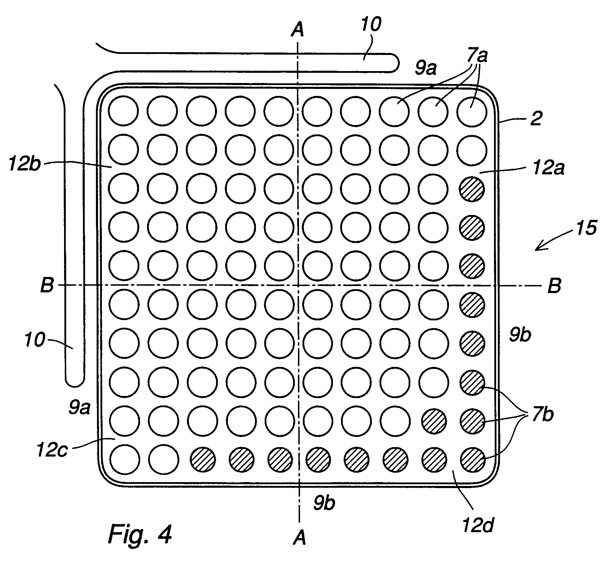

The invention is also applicable to a fuel assembly which has no support member and no central water channel. In such a fuel assembly there are no sub-assemblies, but it can still be divided into four conceived equal orthogonal parts, one part having two sides adjoining the control rod gaps and another part having two sides adjoining the narrow gaps. Figure 4 shows an example of how such a fuel assembly may be designed. The narrow fuel rods 7b are arranged in fuel rod positions adjacent the narrow gaps 9b, and in the other positions coarse fuel rods 7a are arranged. The conceived lines AA and BB divide the fuel assembly into four equal orthogonal parts 12a - 12d. In part 12d, 10 out of the 24 fuel rods are narrow 7b. In part 12b, all the fuel rods are coarse 7a. Such a fuel assembly may, of course, also be formed with a central water channel to improve the moderation in the central parts.

## Claims

1. A fuel assembly intended to be arranged in a boiling water reactor wherein the fuel assembly is surrounded by a first (9a) and a second (9b) pair of gaps which are arranged perpendicular to each other and which, during reactor operation, contain water, wherein said first pair of gaps is designed with a relatively large gap width and intended to accommodate a control rod, said second pair of gaps being designed with a relatively smaller gap width, the fuel assembly comprising a plurality of parallel fuel rods (7a, 7b) surrounded by a fuel channel (2) with a substantially square cross section and being capable of being divided into four equal assembly parts (6a-6d, 12a-12d, 13a-13d, 14a-14d) with the aid of two longitudinal sections which are orthogonal to each other, wherein a first assembly part (6d, 12d, 13d, 14d) is intended to be arranged adjacent to said second pair of gaps and the other assembly parts (6a, 6b, 6c, 12a, 12b, 12c, 13a, 13b, 13c, 14a, 14b, 14c) are intended to be arranged with at least one side adjacent to said first pair of gaps, **characterized** in that the fuel assembly comprises a first group of fuel rods (7b) which have a relatively smaller diameter (d₂) and a second group of fuel rods (7a) which have a relatively larger diameter (d₁), wherein at least one-third of the fuel rods in the first assembly part and at most one-fifth of the fuel rods in the other assembly parts belong to the first group of fuel rods (7b).

2. A fuel assembly according to claim 1 wherein the other assembly parts comprise a second assembly part (6b, 12b, 13b, 14b) intended to be arranged with two sides adjacent to said first pair of gaps, **characterized** in that at most one of the fuel rods in the second assembly part belongs to the first group of fuel rods (7b).

3. A fuel assembly according to claim 1 or 2, **characterized** in that all the fuel rods in the first assembly part (6d) belongs to the first group of fuel rods (7b).

4. A fuel assembly according to claim 1 or 2, **characterized** in that the majority of the fuel rods (7b) in the first group are arranged in positions close to the fuel channel (2).

5. A fuel assembly according to any of the preceding claims, **characterized** in that the fuel rods (7b) in the first group have a diameter (d₂) which is at least 5% smaller than the diameter (d₁) of the fuel rods (7a) in the second group.
